# EUROPEAN PATENT SPECIFICATION

(11) **EP 3 376 059 B1**
(45) Date of publication and mention of the grant of the patent: **18.12.2019**
(21) Application number: 18159621.4
(22) Date of filing: 02.03.2018
(51) Int. Cl.: F16B 17/00, B21D 39/04

(54) **PEDAL ASSEMBLY AND METHOD FOR FASTENING SPACERS TO PEDAL ASSEMBLIES OF MOTOR VEHICLES**
PEDALBAUGRUPPE UND VERFAHREN ZUR BEFESTIGUNG VON SPACERN AN PEDALBAUGRUPPEN VON KRAFTFAHRZEUGEN
ENSEMBLE DE PÉDALE ET PROCÉDÉ DE FIXATION D'ENTRETOISES POUR ENSEMBLES DE PÉDALE DE VÉHICULES À MOTEUR

(30) Priority: 14.03.2017 SE 1750292
(43) Date of publication of application: 19.09.2018
(73) Proprietor: CJ Automotive AB, 514 63 Dalstorp (SE)
(72) Inventor: WESCHKE, Carl Johan Walter, 516 30 Dalsjöfors (SE)
(74) Representative: Bergenstråhle Group AB

(56) References cited:
- FR-A1- 2 757 788
- JP-A- 2014 056 514
- US-A- 3 257 502
- US-A- 3 927 465
- US-A- 4 615 098
- US-A- 5 559 308
- US-A1- 2001 052 706

## Description

### Technical field

The invention considers a method for fastening spacers to a pedal assembly of a motor vehicle and a pedal assembly assembled using such a method.

### Background

A pedal assembly of a motor vehicle (see e.g. JP 2014-56514 A) comprises the actual pedals that are depressed by the driver for braking and accelerating the vehicle, and, for a vehicle with a manual gearbox, for de-clutching when changing gear. The pedal assembly further comprises parts such as power transmissions for transmitting the movement of the pedal into an actual braking or acceleration of the vehicle. For example, if the brake pedal is depressed, the pedal assembly needs some kind of transmission that transmits the pedal movement into a movement of the brake discs so that the vehicle decelerates with a force depending on the depression of the pedal. Such a transmission may be a mechanical and/or pneumatic transmission, or alternatively it may be an electrical transmission in which the movement of the pedal is transformed into an electric signal that instructs the brake system of the vehicle to brake the vehicle according to the movement of the pedal. The pedal assembly further comprises a pedal bracket formed from one or more metal sheets onto which pedal bracket the different parts are mounted. Onto the pedal bracket, a number of spacers, also called distance sleeves, are mounted. The purpose of the spacers is to create a distance from the pedal assembly to other parts of the vehicle, especially to a cowl panel that separates the engine housing from the driving compartment.

Today, the spacers are welded onto the metal sheet of the pedal assembly, before the pedal assembly is mounted into the vehicle. This process has been used for decades for mounting spacers onto pedal assemblies in the vehicle industry. However, such a welding process is time-consuming. Also, the welding could be difficult to perform by a machine depending on where on the pedal assembly that the individual spacers are to be placed. Further, at least parts of the pedal assembly may need to be of a metal treated for example to resist rust. Further, when welding on such treated metal, a troublesome and even toxic gas may appear. Such welding-specific problems may be alleviated by for example making holes into the pedal assembly and fastening the spacers using e.g. screws and nuts. However, such fastening is time-consuming. Consequently, there is a need for an improved method of fastening spacers to pedal assemblies of motor vehicles.

### Summary

It is an object of the invention to address at least some of the problems and issues outlined above. It is an object of embodiments of the invention to quickly and securely attach spacers to a pedal assembly of a motor vehicle.

It is possible to achieve these objects and others by using a method and an apparatus as defined in the attached independent claims.

According to an aspect of the invention, a method is provided for fastening a tube-shaped spacer to a pedal assembly of a motor vehicle, the tube-shaped spacer having a first end and a second end. The spacer is a distance sleeve that when fastened to the pedal assembly and when the pedal assembly has been fastened to the vehicle, creates a distance between the pedal assembly and a wall separating an engine housing from a driving compartment of the vehicle. The tube-shaped spacer further defines a hole extending from the first end towards the second end, the hole of the tube-shaped spacer having a first cross-sectional dimension. The method comprises placing the first end of the spacer onto a first position of a first side of a metal sheet of the pedal assembly where the spacer is to be fastened, the metal sheet having a thickness at the first position. The method further comprises placing a tool onto a second side of the metal sheet at a second position corresponding to an opposite side of the first position so that the tool is positioned opposite the spacer with the metal sheet placed in between the tool and the spacer. The tool has an outer cross-sectional dimension smaller than the first cross-sectional dimension of the hole of the spacer but larger than or at least the same as the first cross-sectional dimension subtracted with two times the thickness of the metal sheet at the first position. The method further comprises thereafter pressing the tool through the metal sheet so that a part of the metal sheet positioned between the tool and the spacer is pressed into the hole of the spacer and against inner walls of the spacer, thereby fastening the spacer to the metal sheet of the pedal assembly.

The part of the metal sheet that is pressed into the hole of the spacer when pressing the tool through the metal sheet will be pressed by the tool onto the inner walls of the spacer, thus bonding the spacer to the metal sheet by means of friction. The tool may be a solid oblong body of a material with the same or larger hardness than the material of the metal sheet. The outer cross-sectional dimension d₂ of the tool should be smaller than the cross-sectional dimension di of the hole of the spacer. In other words, a distance between opposite sides of the tool is less than a distance between opposite sides of the inner walls of the spacer. At the same time, d₂ should be larger or the same as di subtracted with two times the thickness t of the metal sheet. As an example, if d₂ is 8 mm, di 10 mm and t 2 mm, the part of the metal sheet pressed into the hole of the spacer will be flattened out into a thickness of 1 mm along the inner walls of the spacer. As another example, if d₂ is 6 mm, d₁ 10 mm and t 2 mm, the part of the metal sheet pressed into the hole of the spacer will have the same thickness as the metal sheet, i.e. 2 mm along the inner walls of the spacer. If, on the other hand, d₂ is 5 mm, di 10 mm and t 2 mm, no firm connection would occur as the metal sheet pressed into the hole of the spacer is not going to press the spacer radially outwardly.

By such a method, a quick and thereby cost-efficient method is achieved for mounting spacers to pedal assemblies. Also, the resulting fastening of spacer to pedal assembly has turned out to be very firm and robust by using this method. Further, the method is purely mechanical. In other words, there is no treatment needed that may cause a chemical reaction such as the smoke occurring when welding the spacers to the pedal assembly as in prior art.

According to an embodiment, the outer cross-sectional dimension d₂ of the tool comprises a distance between opposite sides of the tool in a first cross-sectional direction, and the first cross-sectional dimension di of the hole of the spacer comprises a distance between opposite sides of the inner walls of the spacer in the first cross-sectional direction.

The term "in a first cross-sectional direction" signifies that the distance between opposite sides of the tool is to be compared with the distance between opposite sides of the inner walls of the spacer in the same cross-sectional direction when the tool has been inserted into the hole of the spacer in a correct manner. When the hole of the spacer is circular, it is the diameter of the tool that is compared with the diameter of the hole, irrespective of any direction in which the diameters are measured. However, when the hole is oval or rectangular-shaped, or in any other shape, the distance is different depending on in which direction you measure and it is important to compare the correct distances with each other. By such a feature, a firm fastening of the spacer to the pedal assembly is secured.

According to another embodiment, the outer cross-sectional dimension d₂ of the tool is at least the same as the first cross-sectional dimension di of the hole of the spacer subtracted with two times a smallest possible thickness according to tolerance variations allowed for the thickness t of the metal sheet.

For example, if the first hole has a diameter of 10 mm and the thickness of the metal sheet at the first position is 2 mm +/- 0,2 mm according to allowed tolerance variations, the tool should have an outer cross-sectional diameter of at least 10 - 1,8^{∗}2 = 6,4 mm. By making the outer cross-sectional dimension of the tool approximately the same as the first cross-sectional dimension of the hole subtracted with a smallest possible thickness of the metal sheet according to tolerance variation, a firm connection between the spacer and the metal sheet is achieved even when there are tolerance variations allowed.

According to an embodiment, the hole of the tube-shaped spacer has the first cross-sectional dimension di at the first end and a second cross-sectional dimension d₄ at the second end, and the second cross-sectional dimension d₄ is greater than the first cross-sectional dimension di such that the inner walls of the tube-shaped spacer are tapered towards the first end. By such form of the tube-shaped spacer, a firm fastening of the spacer to the pedal assembly is secured. The tapered form together with that the metal sheet will be pressed by the tool onto the inner walls of the spacer, makes an ever more robust fastening of the spacer. The risk of that the spacer accidentally will be released from the sheet is thereby lowered.

According to an embodiment, the inner walls of the tube-shaped spacer comprises a groove, which extends along an inner circumference of the hole, at a distance from the first end of the tube-shaped spacer, and a second cross-sectional dimension d₄ of the groove is greater than the first cross-sectional dimension d₁ of the hole. By such an arrangement of the tube-shaped spacer, a firm fastening of the spacer to the pedal assembly is secured. The groove at a distance from the first end together with that the metal sheet will be pressed by the tool onto the inner walls of the spacer and onto inner walls of the groove, makes an ever more robust fastening of the spacer. The risk of that the spacer accidentally will be released from the sheet is thereby lowered, by the extra "hook-like" engagement between the metal sheet and the groove.

According to an embodiment, the outer cross-sectional dimension d₂ of the tool and the first cross-sectional dimension d₁ of the hole of the spacer have the same type of cross-section. It may be possible to achieve a good connection also when having different types of cross-sections, but by using the same type of cross-section for tool and the hole of the spacer, a firm connection is achieved between the spacer and the metal sheet. "Type of cross-section" signifies type of shape, wherein one type of cross-section or shape is circular shape, another is oval shape, a third is quadratic shape etc.

According to another embodiment, the outer cross-sectional dimension d₂ of the tool and the first cross-sectional dimension di of the hole have a circular-shaped cross-section type, an oval-shaped cross-section type or a polygon-shaped cross-section type, such as a square-shaped or triangular-shaped cross-section. Within the scope of the invention, the polygon-shaped cross-section type may have more than four edges. Especially an oval-shaped cross-section has shown to be advantageous for achieving a firm connection between the spacer and the metal sheet of the pedal assembly. The oval-shaped cross-section may be an oblong cross-section.

According to another embodiment, the method further comprises obtaining a sheet hole in the metal sheet at the first position, before the placing of the spacer onto the metal sheet, the sheet hole having a cross-sectional dimension smaller than the outer cross-sectional dimension of the tool.

By obtaining a hole in the metal sheet before pressing the tool through the metal sheet, it is easier to position the tool correctly and thereby fasten the spacer correctly to the pedal assembly than if there is not any sheet hole obtained. Further, the amount of material that is to be pressed up against the inner walls of the spacer can be adapted by changing the size of the sheet hole. The obtaining of the sheet hole may be made by making the sheet hole e.g. by drilling or punching. Alternatively, the sheet blank from which this part of the pedal assembly is made may be received with a pre-made sheet hole.

According to another embodiment, the tool has a first end and a second end distal to the first end, the tool being tapered towards the first end. Further, when placing the tool onto the second side of the metal sheet, the first end is placed towards the second side of the metal sheet.

According to another aspect, a pedal assembly of a motor vehicle is provided, the pedal assembly comprising a pedal arm pivotally connected to a bracket. The bracket comprises a number of tube-shaped spacers, each having a first end and a second end, and each defining a hole extending from the first end towards the second end. The tube-shaped spacers have been fastened to a metal sheet of the bracket with their respective first ends placed onto a first side of the metal sheet using a method according to any of claims 1-9.

According to an embodiment of the pedal assembly, the hole of the tube-shaped spacer has a first cross-sectional dimension di at the first end and a second cross-sectional dimension d₄ at the second end, and the second cross-sectional dimension d₄ is greater than the first cross-sectional dimension di such that the inner walls of the tube-shaped spacer are tapered towards the first end. By such form of the tube-shaped spacer, a firm fastening of the spacer to the pedal assembly is secured. The tapered form together with that the metal sheet will be pressed by the tool onto the inner walls of the spacer, makes an ever more robust fastening of the spacer. The risk of that the spacer accidentally will be released from the sheet is thereby lowered.

According to an embodiment of the pedal assembly, the inner walls of the tube-shaped spacer comprises a groove, which extends along an inner circumference of the hole, at a distance from the first end of the tube-shaped spacer, and a second cross-sectional dimension d₄ of the groove is greater than the first cross-sectional dimension di of the hole. By such an arrangement of the tube-shaped spacer, a firm fastening of the spacer to the pedal assembly is secured. The groove at a distance from the first end together with that the metal sheet will be pressed by the tool onto the inner walls of the spacer and into the groove, makes an ever more robust fastening of the spacer. The risk of that the spacer accidentally will be released from the sheet is thereby lowered, by the extra "hook-like" engagement between the metal sheet and the groove.

Further possible features and benefits of this solution will become apparent from the detailed description below.

### Brief description of drawings

The solution will now be described in more detail by means of exemplary embodiments and with reference to the accompanying drawings, in which:
Fig. 1 is a side view of a pedal assembly in which the present invention may be used.
Fig. 2 is back view of the pedal assembly of fig. 1
Fig. 3 is a front view of the pedal assembly of fig. 1.
Fig. 4 is a cross-sectional side view of a spacer used in the inventive method.
Fig. 5a is a cross-sectional side view illustrating a step of a first embodiment of the inventive method before the tool is pressed through the metal sheet.
Fig. 5b is a cross-sectional side view illustrating a step of the first embodiment after the tool has been pressed through the metal sheet.
Figs. 6a-6c show cross-sectional views along section Y-Y of fig. 5b illustrating different cross-section types of tools and spacers, according to embodiments.
Fig. 7 is a front view illustrating an embodiment of a sheet metal part of a pedal assembly having pre-made sheet holes.
Fig. 8 is a side view of a pedal assembly mounted into a motor vehicle.
Fig. 9 is a flow chart illustrating an embodiment of the invention.
Fig. 10 is a cross-sectional side view of an alternative embodiment of a spacer used in the inventive method, and the side view illustrating the step after the tool has been pressed through the metal sheet.
Fig. 11 is a cross-sectional side view of another alternative embodiment of a spacer used in the inventive method, and the side view illustrating the step after the tool has been pressed through the metal sheet.

### Detailed description

Briefly described, a method is provided that facilitates mounting of metal tube-shaped spacers such as distance sleeves onto sheet metal objects of a pedal assembly of a motor vehicle. This is achieved by positioning the spacer onto one side of the sheet metal object of the pedal assembly, at a position where it is to be fastened, and thereafter positioning a tool on the opposite side of the sheet metal object at a position so that the tool is situated opposite the spacer. Then the tool is pressed through the sheet of the sheet metal object, for example by hammering it into the hole defined by the tube-shape of the spacer, so that a part of the sheet positioned between the tool and the spacer is pressed into the hole of the spacer and against the inner walls of the spacer. Hereby, the spacer is bonded to the sheet metal object by means of friction. In order to achieve a firm connection between the spacer and the sheet metal object, the tool has a cross-sectional dimension that is smaller than the cross-sectional dimension of the hole of the spacer but larger than the cross-sectional dimension of the hole subtracted with two times the thickness of the sheet metal object.

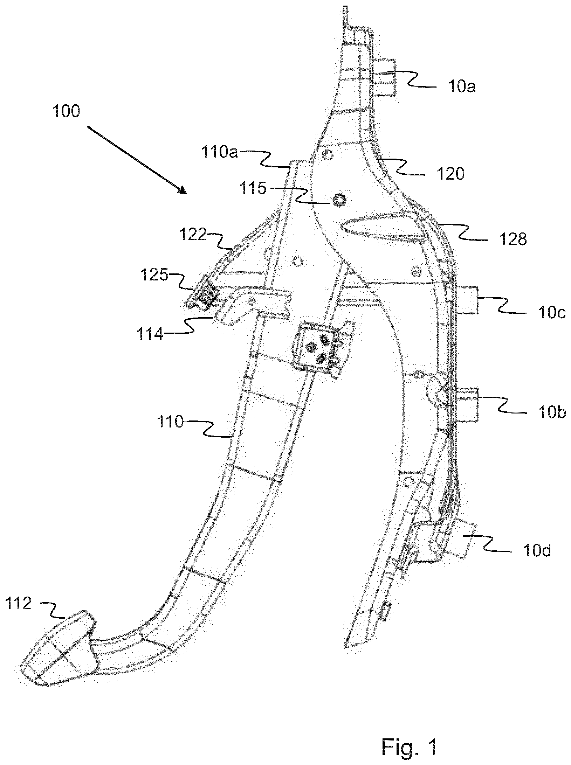

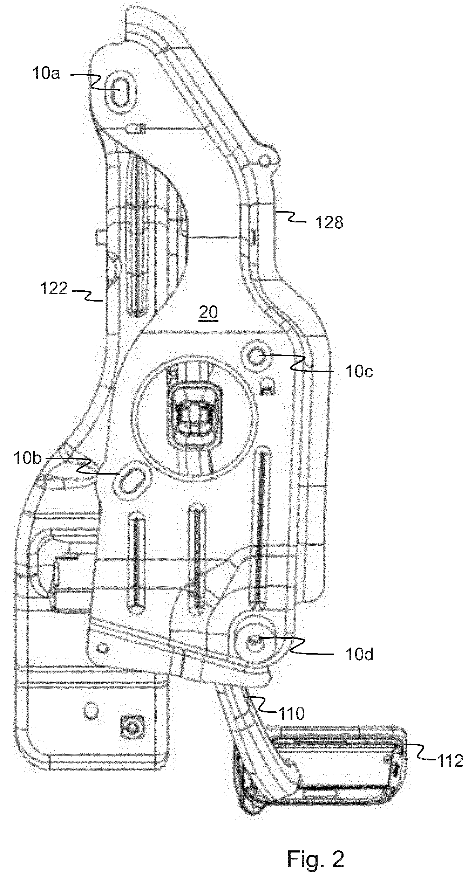

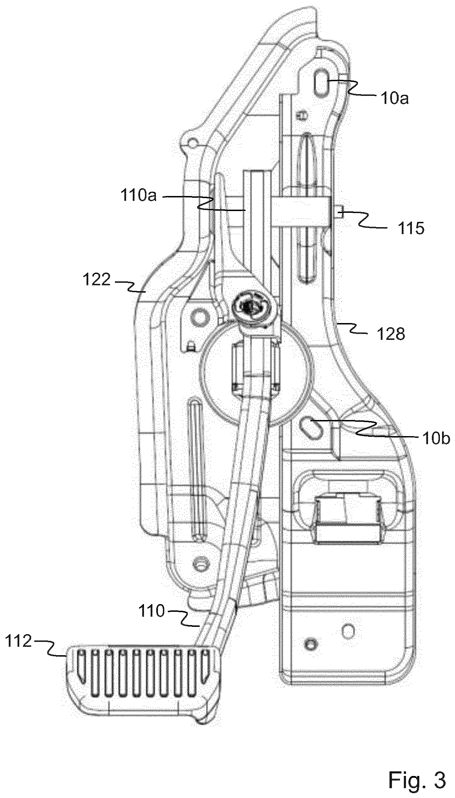

Figs. 1-3 show different views of a pedal assembly 100 in which the present invention may be used. The pedal assembly 100 comprises a pedal arm 110 pivotally connected via a pivot point 115 to a bracket 120 of the pedal assembly. As seen clearer in fig. 3, the pivot point 115 is realized as a pivot shaft on which a first end 110a of the pedal arm 110 is pivotally connected to the bracket 120. The pedal arm 10 has, at its second end distal to the first end 110, a foot pedal 112 onto which a driver of the vehicle is to press when maneuvering the pedal arm. When the driver presses the foot pedal 112, the pedal arm 110 pivots around the pivot shaft 115. Further, the pedal assembly comprises an arrangement (not shown) that provides a counter force to the force provided by the driver of the vehicle when pressing the foot pedal 112. For providing the counter-force, the counter-force providing arrangement may comprise one or more springs. Part 130 is a first part of the counter-force providing arrangement, which first part is attached to the pedal arm. A second part (not shown) of the counter-force providing arrangement distal to the first part 130 is arranged to the bracket 120. The pedal arm further comprises a protruding arm 114, arranged between its first end 110a and the foot pedal 112. The protruding arm 114 is arranged to cooperate with a stop 125 arranged on a first part 122 of the bracket 120 in order to prevent the pedal arm of swinging back too far after the driver has stopped depressing the foot pedal 112. The bracket 120 comprises the first part 122 as well as a second part 128. The second part 128 is made up from a metal sheet 20. The metal sheet may be from any kind of metal, such as steel, aluminum and magnesium.

Attached to a first side of the second part's 128 metal sheet 20, four tube-shaped spacers 10a, 10b, 10c, 10d made of metal are arranged. Of course the number of spacers could be more or less than four as well. At least one of the tube-shaped spacers 10a, 10b, 10c and 10d are attached to the metal sheet 20 using any of the embodiments of the method according to the invention. The metal sheet 20 of the pedal assembly may be seen as a metal sheet object or part of an object of the pedal assembly that is produced from sheet metal.

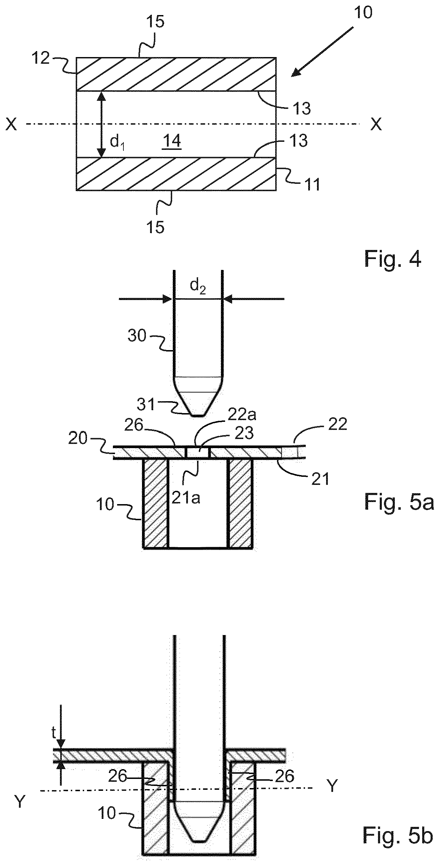

Fig. 4 shows a close-up view of any of the tube-shaped spacers 10a, 10b, 10c, 10d in figs. 1-3, and wherein the tube-shaped spacer of fig. 4 has been given reference number 10. The tube-shaped spacer 10 has a longitudinal extension essentially along a longitudinal center axis X-X from its first longitudinal end 11 towards its second longitudinal end 12. Further, the tube-shaped spacer 10 has outer walls 15 having a surface facing away from the center axis X-X. The tube-shaped spacer 10 further has inner walls 13 having a surface facing towards the center axis X-X, the inner walls defining a tube-shaped hole 14 of the spacer. Further, the hole 14 of the spacer extends from the first end 11 towards the second end 12 essentially along the extension axis X-X. The inner walls 13 of the spacer thereby essentially have an extension along the axis X-X. The hole 14 of the spacer 10 may be a through hole extending over the whole length of the spacer from the first end to the second end, as shown in the embodiment of fig. 4. Alternatively, according to a not shown embodiment, the hole 14 of the spacer 10 may be a recess extending from the first end 11 along the extensions axis X-X to a dead-end more or less close to the second end 12. The hole 14 of the tube-shaped spacer 10 has a first cross-sectional dimension di.

Fig. 5a and 5b illustrate an embodiment of a method for fastening such a tube-shaped spacer 10 as shown in fig. 4 to a pedal assembly of a motor vehicle. In fig. 5a, the tube-shaped spacer 10 is placed with its first end 11 onto a first position 21a of a first side 21 of a metal sheet 20 of the pedal assembly where the spacer is to be fastened, for example the metal sheet of the second part 128 of the bracket 120 of figs. 1-3. The metal sheet has a thickness t at the first position. In an embodiment, the thickness of the metal sheet may be the same over the whole sheet.

Further, as shown in fig. 5a, a tool 30 is placed at a second side 22 of the metal sheet 20, the second side 22 being the side opposite the first side 21. The tool 30 has a first end 31 and a second end distal to the first end. The tool is positioned with its first end 31 at a second position 22a opposite the first position 21a, so that the tool 30 is positioned opposite the spacer 10 with the metal sheet 20 placed in between the tool 30 and the spacer 10. Further, the tool 30 has an outer cross-sectional dimension d₂ smaller than the first cross-sectional dimension di of the hole 14 of the spacer 10 but larger than or at least the same as the cross-sectional dimension di subtracted with two times the thickness t of the metal sheet 20 at the first position 21a.

Thereafter, as shown in fig. 5b, the tool 30 is pressed with its first end 31 through the metal sheet 20, so that a part 26 of the metal sheet positioned between the tool 30 and the spacer 10 is pressed into the hole 14 of the spacer and against the inner walls 13 of the spacer, thereby fastening the spacer 10 to the metal sheet 20 of the pedal assembly 100.

According to the embodiment shown in fig. 5a, a sheet hole 23 has been made in the metal sheet 20 at the first position 21a, before the spacer 10 was placed onto the metal sheet 20, the sheet hole 23 having a cross-sectional dimension d₃, which is smaller than the outer cross-sectional dimension d₂ of the tool 30. Such a sheet hole 23 would facilitate the pressing of the tool through metal sheet. According to another embodiment, however, it is also possible to just press the tool through the metal sheet at the first position without any such prefabricated sheet hole.

According to the embodiment of figs. 5a and 5b, the tool 30 is tapered towards its first end 31. However, the first end of the tool may have any other possible shape, such as having the same cross-sectional size towards the first end.

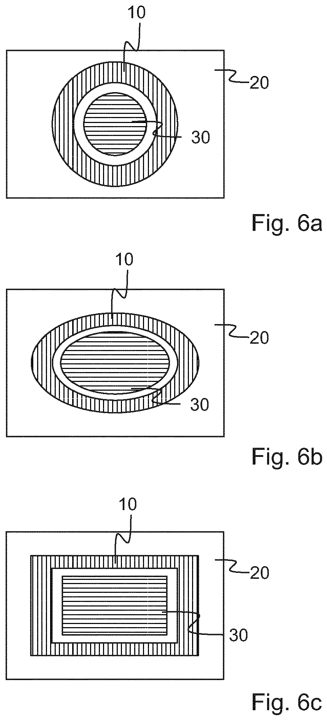

Figs. 6a-6c are each a cross-sectional view at section Y-Y of fig. 5b, when the tool 30 has been pressed through the metal sheet 20 and into the hole 14 of the spacer 10. The figures 6a-6c show some different cross-sectional shapes that may be used for the spacer as well as for the tool, according to different embodiment. Fig. 6a shows an embodiment where the tool 30 as well as the spacer 10 has a circular cross-sectional shape. Fig. 6b shows an embodiment where the tool 30 as well as the spacer 10 has an oval or oblong cross-sectional shape. Fig. 6c shows an embodiment where the tool 30 as well as the spacer 10 has a rectangular cross-sectional shape.

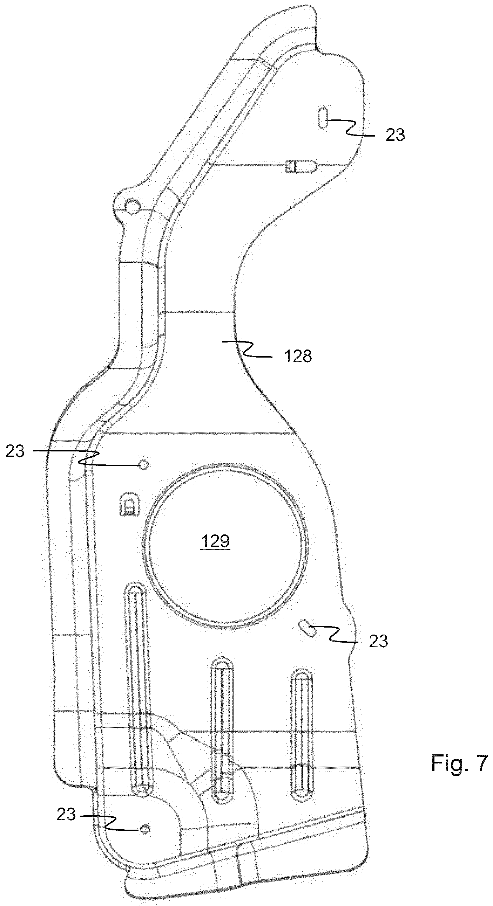

Fig. 7 shows an embodiment of the second part 128 of the bracket 120 shown in figs. 1-3, the second part being formed from a metal sheet, wherein no spacers have yet been fastened to the second part 128. The second part 128 of the bracket comprises in this embodiment four sheet holes 23, one for each position where spacers 10 are to be fastened. The second part of the exemplary bracket shown in fig. 7 also has a large sheet hole 129 that is used for receiving a connection for connecting a brake booster to the pedal arm. In other words, in the example, the pedal assembly is a brake pedal assembly. However, the inventive method may be used for any kind of pedal assembly, such as an accelerator pedal assembly and a clutch pedal assembly, as well as a brake pedal assembly.

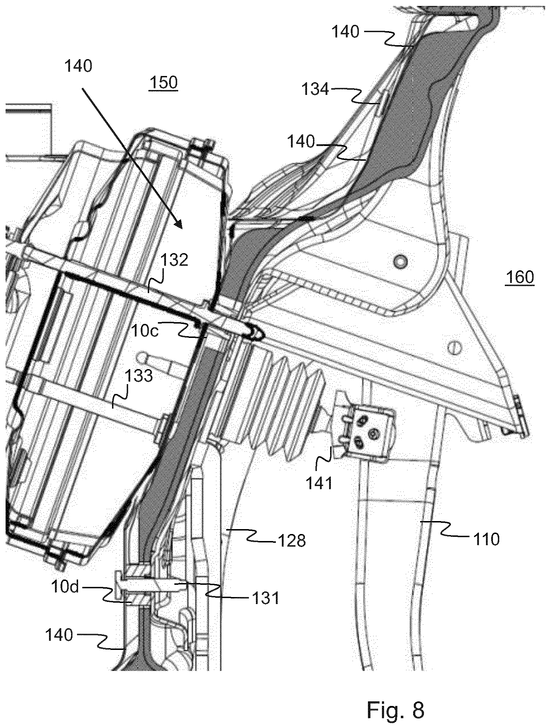

Fig. 8 shows an exemplary brake pedal assembly 100 inserted into a motor vehicle. The pedal assembly 100 has a pedal arm 110. The second part 128 of the bracket 120 is here attached to a cowl panel 140 separating an engine housing 150 from a driving compartment 160 of the motor vehicle. The second part 128 of the bracket comprises the spacers 10c, 10d, (and two additional spacers 10a, 10b not shown in this figure, compare to figs. 1-3) attached using the inventive method. The second part 128 of the bracket is attached to the cowl panel 140 using screws 131, 132, 133, 134 that are screwed through the hole in the spacers 10a, 10b, 10c, 10d, and attached to a screw nut arranged on the opposite side of the second part 128 of the bracket seen from the screw. By attaching the cowl panel 140 to the second part 128 of the bracket using the spacers 10a, 10b, 10c, 10d, a distance is created between the pedal assembly 100 and the cow panel 140, thereby reducing transmission of sound, vibrations, temperature etc. between engine housing 150 and driving compartment 160. Fig. 8 further shows a brake booster 140 arranged in the engine housing 150, which brake booster 140 is connected to the pedal arm 110 via a brake booster connection 141.

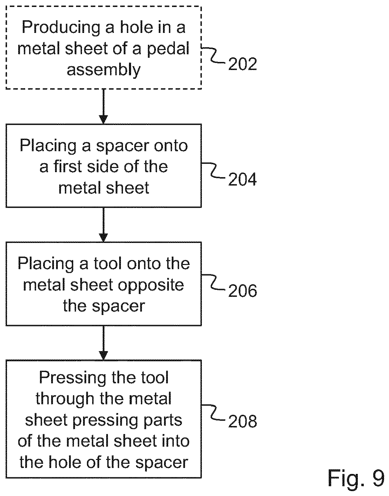

Fig. 9 describes a method for fastening a tube-shaped spacer to a pedal assembly of a motor vehicle, the tube-shaped spacer having a first end and a second end. The tube-shaped spacer defines a hole extending from its first end towards its second end. The hole has a first cross-sectional dimension. The method comprises placing 204 the first end of the spacer onto a first position of a first side of a metal sheet of the pedal assembly where the spacer is to be fastened, the metal sheet having a thickness at the first position. The method further comprises placing 206 a tool onto a second side of the metal sheet at a second position corresponding to an opposite side of the first position so that the tool is positioned opposite the spacer with the metal sheet placed in between the tool and the spacer, the tool having an outer cross-sectional dimension smaller than the first cross-sectional dimension of the hole of the spacer but larger than or at least the same as the first cross-sectional dimension subtracted with two times the thickness of the metal sheet at the first position. The method further comprises thereafter pressing 208 the tool through the metal sheet, so that a part of the metal sheet positioned between the tool and the spacer is pressed into the hole of the spacer and against inner walls of the spacer, thereby fastening the spacer to the metal sheet of the pedal assembly.

According to an embodiment, the method may also comprise, before the placing 204 of the spacer onto the metal sheet, obtaining 202 a sheet hole in the metal sheet at the first position, the sheet hole having a cross-sectional dimension smaller than the outer cross-sectional dimension of the tool.

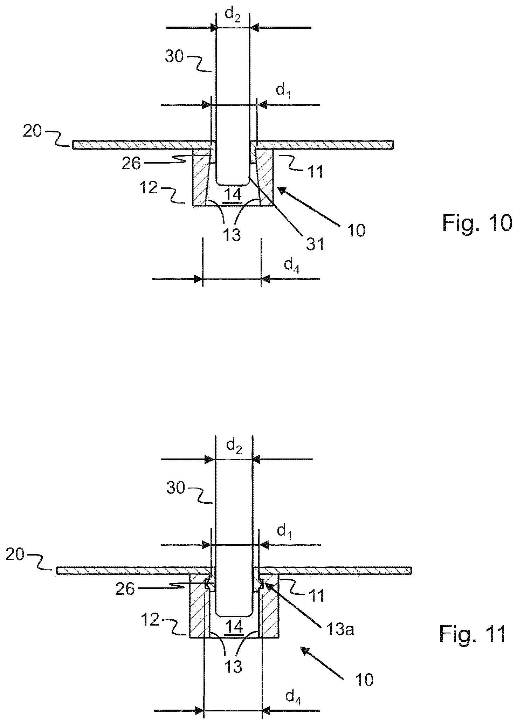

Fig. 10 shows a close-up view of any of the tube-shaped spacers 10a, 10b, 10c, 10d in figs. 1-3, according to an alternative embodiment of the spacer, just after the tool 30 is pressed with its first end 31 through the metal sheet 20, as described in relation to fig. 5a - 5b. The tool 30 is pressed so that a part 26 of the metal sheet positioned between the tool 30 and the spacer 10 is pressed into the hole 14 of the spacer and against the inner walls 13 of the spacer, thereby fastening the spacer 10 to the metal sheet 20 of the pedal assembly 100. The tube-shaped spacer 10 has a longitudinal extension from its first longitudinal end 11 towards its second longitudinal end 12. The hole 14 of the spacer 10 is a through hole extending over the whole length of the spacer from the first end to the second end, as shown in the embodiment of fig. 10. The hole 14 of the tube-shaped spacer 10 according to this embodiment has a first cross-sectional dimension di at the first end 11 of the spacer 10, and a second cross-sectional dimension d₄ at the second end 12. The second cross-sectional dimension d₄ is larger than the first cross-sectional dimension di such that the tube-shaped spacer 10 has inner walls 13 which are tapered from the second end 12 towards the first end 11. Accordingly, the hole 14 of the spacer 10 is tapered. By such form of the tube-shaped spacer 10, a firm fastening of the spacer 10 to the pedal assembly 100 is secured. The tapered form together with that the part 26 of the metal sheet is pressed by the tool 30 onto the inner walls 13 of the spacer 10, makes an even more robust fastening of the spacer 10.

Fig. 11 shows a close-up view of any of the tube-shaped spacers 10a, 10b, 10c, 10d in figs. 1-3, according to another alternative embodiment, just after the tool 30 is pressed with its first end 31 through the metal sheet 20, as described in relation to fig. 5a - 5b. The tool 30 is pressed so that a part 26 of the metal sheet positioned between the tool 30 and the spacer 10 is pressed into the hole 14 of the spacer and against the inner walls 13 of the spacer, thereby fastening the spacer 10 to the metal sheet 20 of the pedal assembly 100. The tube-shaped spacer 10 has a longitudinal extension from its first longitudinal end 11 towards its second longitudinal end 12. The hole 14 of the spacer 10 is a through hole extending over the whole length of the spacer from the first end to the second end, as shown in the embodiment of fig. 11. The hole 14 according to this alternative embodiment has a first cross-sectional dimension di along the entire extension, i.e. the inner walls 13 are parallel in the same way as the tube-shaped spacer 10 of fig. 4, but the inner walls 13 also comprises a groove 13a. The groove 13a is arranged along an inner circumference of the hole 14 at a distance from the first end 11. The groove 13a has a second cross-sectional dimension d₄ which is larger than the first cross-sectional dimension di. When pressing the tool 30 into the hole 14, the part 26 of the metal sheet is pressed onto the inner walls 13 as well as into the groove 13a, which can be seen in the figure. By such form of the tube-shaped spacer 10, a firm fastening of the spacer 10 to the pedal assembly 100 is secured, because the extra "hook-like" engagement between the part of the metal sheet 26 and the groove 13a.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited to said specificities. Reference to an element in the singular is not intended to mean "one and only one" unless explicitly so stated, but rather "one or more."

## Claims

1. A method for fastening a tube-shaped spacer (10) to a pedal assembly (100) of a motor vehicle, the spacer (10) is a distance sleeve arranged for creating a distance between the pedal assembly (100) and a wall (140) separating an engine housing (150) from a driving compartment (160) of the vehicle, the tube-shaped spacer (10) having a first end (11) and a second end (12), the tube-shaped spacer defining a hole (14) extending from the first end (11) towards the second end (12), the hole (14) of the tube-shaped spacer having a first cross-sectional dimension (di), the method comprising:
placing (204) the first end (11) of the spacer (10) onto a first position (21a) of a first side (21) of a metal sheet (20) of the pedal assembly (100) where the spacer is to be fastened, the metal sheet (20) having a thickness (t) at the first position (21a);
placing (206) a tool (30) onto a second side (22) of the metal sheet (20) at a second position (22a) corresponding to an opposite side of the first position (21a), so that the tool (30) is positioned opposite the spacer (10) with the metal sheet (20) placed in between the tool (30) and the spacer, the tool (30) having an outer cross-sectional dimension (d₂) smaller than the first cross-sectional dimension (d₁) of the hole (14) of the spacer (10) but larger than or at least the same as the first cross-sectional dimension (d₁) subtracted with two times the thickness (t) of the metal sheet (20) at the first position (21a); and thereafter
pressing (208) the tool (30) through the metal sheet (20), so that a part of the metal sheet positioned between the tool (30) and the spacer (10) is pressed into the hole (14) of the spacer and against inner walls (13) of the spacer, thereby fastening the spacer (10) to the metal sheet (20) of the pedal assembly (100).

2. Method according to claim 1, wherein the outer cross-sectional dimension (d₂) of the tool (30) comprises a distance between opposite sides of the tool in a first cross-sectional direction, and the first cross-sectional dimension (d₁) of the hole (14) of the spacer (10) comprises a distance between opposite sides of the inner walls of the spacer in the first cross-sectional direction.

3. Method according to any of the preceding claims, wherein the outer cross-sectional dimension (d₂) of the tool (30) is at least the same as the first cross-sectional dimension (d₁) of the hole (14) of the spacer (10) subtracted with two times a smallest possible thickness according to tolerance variations allowed for the thickness (t) of the metal sheet.

4. Method according to any of the preceding claims, wherein the hole (14) of the tube-shaped spacer has the first cross-sectional dimension (d₁) at its first end (11) and a second cross-sectional dimension (d₄) at its second end (12), and the second cross-sectional dimension (d₄) is greater than the first cross-sectional dimension (d₁), such that the inner walls (13) of the tube-shaped spacer (10) are tapered towards the first end (11).

5. Method according to any of claims 1-3, wherein the inner walls (13) of the tube-shaped spacer (10) comprises a groove (13a) extending along an inner circumference of the hole (14) at a distance from the first end (11) of the tube-shaped spacer (10), and a second cross-sectional dimension (d₄) of the groove (13a) is greater than the first cross-sectional dimension (d₁) of the hole (14).

6. Method according to any of the preceding claims, wherein the outer cross-section of the tool (30) and the first cross-section of the hole (14) of the spacer (10) have the same type of cross-section.

7. Method according to claim 6, wherein the outer cross-section of the tool (30) and the first cross-section of the hole (14) have a circular-shaped cross-section type, an oval-shaped cross-section type or a polygon-shaped cross-section type, such as a square-shaped or triangular-shaped cross-section.

8. Method according to any of the preceding claims, further comprising:
obtaining (202) a sheet hole (23) in the metal sheet (20) at the first position, before the placing (204) of the spacer (10) onto the metal sheet (20), the sheet hole (23) having a cross-sectional dimension (d₃) smaller than the outer cross-sectional dimension (d₂) of the tool (30).

9. Method according to any of the preceding claims, wherein the tool (30) has a first end (31) and a second end (32) distal to the first end, the tool being tapered towards the first end (31), and wherein in the placing (206) of the tool (30) onto the second side (22) of the metal sheet (20), the first end (31) is placed towards the second side (22) of the metal sheet (20).

10. A pedal assembly (100) of a motor vehicle, comprising a pedal arm (110) pivotally connected to a bracket (120), the bracket comprising a number of tube-shaped spacers (10a, 10b, 10c, 10d), each having a first end (11) and a second end (12), and each defining a hole (14) extending from the first end (11) towards the second end (12), wherein the tube-shaped spacers (10a, 10b, 10c, 10d) have been fastened to a metal sheet of the bracket (120) with their respective first ends (11) placed onto a first side (21) of the metal sheet using a method according to any of claims 1-9.

11. Pedal assembly according to claim 10, wherein the hole (14) of the tube-shaped spacer has the first cross-sectional dimension (d₁) at its first end (11) and a second cross-sectional dimension (d₄) at its second end (12), and the second cross-sectional dimension (d₄) is greater than the first cross-sectional dimension (di), such that inner walls (13) of the tube-shaped spacer (10) are tapered towards the first end (11).

12. Pedal assembly according to claim 10, wherein inner walls (13) of the tube-shaped spacer (10) comprises a groove (13a) extending along an inner circumference of the hole (14) at a distance from the first end (11) of the tube-shaped spacer (10), and a second cross-sectional dimension (d₄) of the groove (13a) is greater than the first cross-sectional dimension (d₁) of the hole (14).

## Patentansprüche

1. Verfahren zum Befestigen eines rohrförmigen Abstandhalters (10) an einer Pedalanordnung (100) eines Kraftfahrzeugs, wobei der Abstandhalter (10) eine Abstandshülse ist, die dazu angeordnet ist, einen Abstand zwischen der Pedalanordnung (100) und einer Wand (140), die ein Motorgehäuse (150) von einer Fahrerkabine (160) des Fahrzeugs trennt, zu erzeugen, wobei der rohrförmige Abstandhalter (10) ein erstes Ende (11) und ein zweites Ende (12) aufweist, wobei der rohrförmige Abstandhalter eine Bohrung (14) definiert, die sich vom ersten Ende (11) zum zweiten Ende (12) erstreckt, wobei die Bohrung (14) des rohrförmigen Abstandhalters eine erste Querschnittsabmessung (d₁) aufweist, wobei das Verfahren Folgendes umfasst:
Platzieren (204) des ersten Endes (11) des Abstandhalters (10) auf einer ersten Position (21a) einer ersten Seite (21) eines Blechs (20) der Pedalanordnung (100), an dem der Abstandhalter zu befestigen ist, wobei das Blech (20) an der ersten Position (21a) eine Stärke (t) aufweist;
Platzieren (206) eines Werkzeugs (30) auf einer zweiten Seite (22) des Blechs (20) an einer zweiten Position (22a), die einer der ersten Position (21a) entgegengesetzten Seite entspricht, sodass das Werkzeug (30) dem Abstandhalter (10) entgegengesetzt angeordnet ist, mit dem Blech (20) zwischen dem Werkzeug (30) und dem Abstandhalter, wobei das Werkzeug (30) eine äußere Querschnittsabmessung (d₂) aufweist, die kleiner als die erste Querschnittsabmessung (d₁) der Bohrung (14) des Abstandhalters (10) ist, aber größer als oder zumindest gleich der ersten Querschnittsabmessung (d₁) abzüglich der zweifachen Stärke (t) des Blechs (20) an der ersten Position (21a) ist; und anschließend
Drücken (208) des Werkzeugs (30) durch das Blech (20), sodass ein Teil des Blechs, der zwischen dem Werkzeug (30) und dem Abstandhalter (10) angeordnet ist, in die Bohrung (14) des Abstandhalters und gegen Innenwände (13) des Abstandhalters gedrückt wird, wodurch der Abstandhalter (10) an dem Blech (20) der Pedalanordnung (100) befestigt wird.

2. Verfahren nach Anspruch 1, wobei die äußere Querschnittsabmessung (d₂) des Werkzeugs (30) einen Abstand zwischen entgegengesetzten Seiten des Werkzeugs in eine erste Querschnittsrichtung umfasst und die erste Querschnittsabmessung (d₁) der Bohrung (14) des Abstandhalters (10) einen Abstand zwischen entgegengesetzten Seiten der Innenwände des Abstandhalters in der ersten Querschnittsrichtung umfasst.

3. Verfahren nach einem der vorstehenden Ansprüche, wobei die äußere Querschnittsabmessung (d₂) des Werkzeugs (30) zumindest genauso groß ist wie die erste Querschnittsabmessung (d₁) der Bohrung (14) des Abstandhalters (10) abzüglich der zweifachen kleinstmöglichen Stärke gemäß für die Stärke (t) des Blechs zulässigen Toleranzvariationen.

4. Verfahren nach einem der vorstehenden Ansprüche, wobei die Bohrung (14) des rohrförmigen Abstandhalters die erste Querschnittsabmessung (d₁) an ihrem ersten Ende (11) und eine zweite Querschnittsabmessung (d₄) an ihrem zweiten Ende (12) aufweist und wobei die zweite Querschnittsabmessung (d₄) größer als die erste Querschnittsabmessung (d₁) ist, sodass die Innenwände (13) des rohrförmigen Abstandhalters (10) zum ersten Ende (11) hin verjüngt sind.

5. Verfahren nach einem der Ansprüche 1-3, wobei die Innenwände (13) des rohrförmigen Abstandhalters (10) eine Nut (13a) umfassen, die sich entlang eines Innenumfangs der Bohrung (14) in einem Abstand vom ersten Ende (11) des rohrförmigen Abstandhalters (10) erstreckt, und wobei eine zweite Querschnittsabmessung (d₄) der Nut (13a) größer als die erste Querschnittsabmessung (d₁) der Bohrung (14) ist.

6. Verfahren nach einem der vorstehenden Ansprüche, wobei der äußere Querschnitt des Werkzeugs (30) und der erste Querschnitt der Bohrung (14) des Abstandhalters (10) denselben Querschnittstyp aufweisen.

7. Verfahren nach Anspruch 6, wobei der äußere Querschnitt des Werkzeugs (30) und der erste Querschnitt der Bohrung (14) einen kreisförmigen Querschnittstyp, einen ovalen Querschnittstyp oder einen vieleckigen Querschnittstyp, zum Beispiel einen quadratischen oder dreieckigen Querschnitt, aufweisen.

8. Verfahren nach einem der vorstehenden Ansprüche, ferner Folgendes umfassend:
Erhalten (202) einer Blechbohrung (23) im Blech (20) an der ersten Position vor dem Platzieren (204) des Abstandhalters (10) auf dem Blech (20), wobei die Blechbohrung (23) eine Querschnittsabmessung (d₃) aufweist, die kleiner als die äußere Querschnittsabmessung (d₂) des Werkzeugs (30) ist.

9. Verfahren nach einem der vorstehenden Ansprüche, wobei das Werkzeug (30) ein erstes Ende (31) und ein zweites Ende (32) distal vom ersten Ende aufweist, wobei das Werkzeug zum ersten Ende (31) hin verjüngt ist und wobei beim Platzieren (206) des Werkzeugs (30) auf der zweiten Seite (22) des Blechs (20) das erste Ende (31) zur zweiten Seite (22) des Blechs (20) hin platziert wird.

10. Pedalanordnung (100) eines Kraftfahrzeugs, einen Pedalarm (110) umfassend, der verschwenkbar mit einem Bügel (120) verbunden ist, wobei der Bügel mehrere rohrförmige Abstandhalter (10a, 10b, 10c, 10d) umfasst, die jeweils ein erstes Ende (11) und ein zweites Ende (12) aufweisen und jeweils eine Bohrung (14) definieren, die sich vom ersten Ende (11) zum zweiten Ende (12) hin erstreckt, wobei die rohrförmigen Abstandhalter (10a, 10b, 10c, 10d) an einem Blech des Bügels (120) befestigt wurden, wobei ihre jeweiligen ersten Enden (11) unter Verwendung eines Verfahrens nach einem der Ansprüche 1-9 auf einer ersten Seite (21) des Blechs platziert wurden.

11. Pedalanordnung nach Anspruch 10, wobei die Bohrung (14) des rohrförmigen Abstandhalters die erste Querschnittsabmessung (d₁) am ersten Ende (11) und eine zweite Querschnittsabmessung (d₄) am zweiten Ende (12) aufweist und die zweite Querschnittsabmessung (d₄) größer als die erste Querschnittsabmessung (d₁) ist, sodass Innenwände (13) des rohrförmigen Abstandhalters (10) zum ersten Ende (11) hin verjüngt sind.

12. Pedalanordnung nach Anspruch 10, wobei die Innenwände (13) des rohrförmigen Abstandhalters (10) eine Nut (13a) umfassen, die sich in einem Abstand vom ersten Ende (11) des rohrförmigen Abstandhalters (10) entlang eines Innenumfangs der Bohrung (14) erstreckt, und wobei eine zweite Querschnittsabmessung (d₄) der Nut (13a) größer als die erste Querschnittsabmessung (d₁) der Bohrung (14) ist.

## Revendications

1. Procédé de fixation d'une entretoise en forme de tube (10) à un ensemble de pédale (100) d'un véhicule automobile, l'entretoise (10) étant un manchon d'écartement conçu pour créer une distance entre l'ensemble de pédale (100) et une paroi (140) séparant un carter moteur (150) d'un compartiment de conduite (160) du véhicule, l'entretoise en forme de tube (10) ayant une première extrémité (11) et une seconde extrémité (12), l'entretoise en forme de tube définissant un trou (14) s'étendant de la première extrémité (11) vers la seconde extrémité (12), le trou (14) de l'entretoise en forme de tube ayant une première dimension transversale (d₁), le procédé comprenant les étapes consistant à :
placer (204) la première extrémité (11) de l'entretoise (10) sur une première position (21a) d'un premier côté (21) d'une feuille métallique (20) de l'ensemble de pédale (100) où l'entretoise doit être fixée, la feuille métallique (20) ayant une épaisseur (t) au niveau de la première position (21a) ;
placer (206) un outil (30) sur un second côté (22) de la feuille métallique (20) au niveau d'une seconde position (22a) correspondant à un côté opposé de la première position (21a), de sorte que l'outil (30) soit positionné en face de l'entretoise (10) avec la feuille métallique (20) placée entre l'outil (30) et l'entretoise, l'outil (30) ayant une dimension de la coupe transversale extérieure (d₂) inférieure à la première dimension de la coupe transversale (d₁) du trou (14) de l'entretoise (10) mais supérieure ou au moins égale à la première dimension de la coupe transversale (d₁) à laquelle est soustraite deux fois l'épaisseur (t) de la feuille métallique (20) au niveau de la première position (21a) ; et par la suite
presser (208) l'outil (30) à travers la feuille métallique (20), de sorte qu'une partie de la feuille métallique placée entre l'outil (30) et l'entretoise (10) soit pressée dans le trou (14) de l'entretoise et contre les parois internes (13) de l'entretoise, fixant ainsi l'entretoise (10) à la feuille métallique (20) de l'ensemble de pédale (100).

2. Procédé selon la revendication 1, la dimension de la coupe transversale extérieure (d₂) de l'outil (30) comprenant une distance entre des côtés opposés de l'outil dans une première direction de la coupe transversale, et la première dimension de la coupe transversale (d₁) du trou (14) de l'entretoise (10) comprenant une distance entre des côtés opposés des parois internes de l'entretoise dans la première direction de la coupe transversale.

3. Procédé selon l'une quelconque des revendications précédentes, la dimension de la coupe transversale extérieure (d₂) de l'outil (30) étant au moins égale à la première dimension de la coupe transversale (d₁) du trou (14) de l'entretoise (10) à laquelle est soustraite deux fois l'épaisseur la plus petite possible selon des variations de tolérance autorisées pour l'épaisseur (t) de la feuille métallique.

4. Procédé selon l'une quelconque des revendications précédentes, le trou (14) de l'entretoise en forme de tube ayant la première dimension de la coupe transversale (d₁) au niveau de sa première extrémité (11) et une seconde dimension de la coupe transversale (d₄) au niveau de sa seconde extrémité (12), et la seconde dimension de la coupe transversale (d₄) étant supérieure à la première dimension de la coupe transversale (d₁), de sorte que les parois internes (13) de l'entretoise en forme de tube (10) soient effilées vers la première extrémité (11).

5. Procédé selon l'une quelconque des revendications 1 à 3, les parois internes (13) de l'entretoise en forme de tube (10) comprenant une rainure (13a) s'étendant le long d'une circonférence intérieure du trou (14) à une distance de la première extrémité (11) de l'entretoise en forme de tube (10) et une seconde dimension de la coupe transversale (d₄) de la rainure (13a) étant supérieure à la première dimension de la coupe transversale (d₁) du trou (14).

6. Procédé selon l'une quelconque des revendications précédentes, la coupe transversale extérieure de l'outil (30) et la première coupe transversale du trou (14) de l'entretoise (10) ayant le même type de coupe transversale.

7. Procédé selon la revendication 6, la coupe transversale extérieure de l'outil (30) et la première coupe transversale du trou (14) ayant un type de coupe transversale de forme circulaire, un type de coupe transversale de forme ovale ou un type de coupe transversale de forme polygonale, telle qu'une coupe transversale de forme carrée ou de forme triangulaire.

8. Procédé selon l'une quelconque des revendications précédentes, comprenant en outre l'étape consistant à :
obtenir (202) un trou de feuille (23) dans la feuille métallique (20) au niveau de la première position, avant le placement (204) de l'entretoise (10) sur la feuille métallique (20), le trou de feuille (23) ayant une dimension de la coupe transversale (d₃) inférieure à la dimension de la coupe transversale extérieure (d₂) de l'outil (30).

9. Procédé selon l'une quelconque des revendications précédentes, l'outil (30) ayant une première extrémité (31) et une seconde extrémité (32) distale par rapport à la première extrémité, l'outil étant effilé vers la première extrémité (31), et lors du placement (206) de l'outil (30) sur le second côté (22) de la feuille métallique (20), la première extrémité (31) étant placée vers le second côté (22) de la feuille métallique (20).

10. Ensemble de pédale (100) d'un véhicule automobile, comprenant un bras de pédale (110) relié de manière pivotante à un support (120), le support comprenant un certain nombre d'entretoises en forme de tube (10a, 10b, 10c, 10d), chacune ayant une première extrémité (11) et une seconde extrémité (12), et chacune définissant un trou (14) s'étendant depuis la première extrémité (11) vers la seconde extrémité (12), les entretoises en forme de tube (10a, 10b, 10c, 10d) ayant été fixées à une feuille métallique du support (120) avec leurs premières extrémités (11) respectives placées sur un premier côté (21) de la feuille métallique au moyen d'un procédé selon l'une quelconque des revendications 1 à 9.

11. Ensemble de pédale selon la revendication 10, le trou (14) de l'entretoise en forme de tube ayant la première dimension de la coupe transversale (d₁) au niveau de sa première extrémité (11) et une seconde dimension de la coupe transversale (d₄) au niveau de sa seconde extrémité (12), et la seconde dimension de la coupe transversale (d₄) étant supérieure à la première dimension de la coupe transversale (d₁), de sorte que les parois internes (13) de l'entretoise en forme de tube (10) soient effilées vers la première extrémité (11).

12. Ensemble de pédale selon la revendication 10, les parois internes (13) de l'entretoise en forme de tube (10) comprenant une rainure (13a) s'étendant le long d'une circonférence intérieure du trou (14) à une distance de la première extrémité (11) de l'entretoise en forme de tube (10), et une seconde dimension de la coupe transversale (d₄) de la rainure (13a) étant supérieure à la première dimension de la coupe transversale (d₁) du trou (14).
